# EUROPÄISCHE PATENTSCHRIFT

(11) **EP 1 600 735 B1**
(45) Veröffentlichungstag und Bekanntmachung des Hinweises auf die Patenterteilung: **29.11.2006**
(21) Anmeldenummer: 04012611.2
(22) Anmeldetag: 27.05.2004
(51) Int. Cl.: G01C 21/36, G08G 1/0969

(54) **Kraftfahrzeugnavigationsgerät**
Navigation apparatus for vehicles
Appareil de navigation pour véhicules

(43) Veröffentlichungstag der Anmeldung: 30.11.2005
(73) Patentinhaber: Delphi Technologies, Inc., Troy, MI 48098 (US)
(72) Erfinder: Ruschkowski, Jürgen, 90419 Nürnberg (DE)
(74) Vertreter: Manitz, Finsterwald & Partner GbR

(56) Entgegenhaltungen:
- EP-A- 0 504 854
- WO-A-20/04021305
- US-B1- 6 230 099
- US-B1- 6 567 743
- US-B1- 6 633 812

## Beschreibung

Die Erfindung betrifft ein Kraftfahrzeugnavigationsgerät mit einem Speichermedium, das eine digitale Landkarte enthält, und einer mit dem Speichermedium verbundenen zentralen Recheneinheit zur Ermittlung einer optimierten Fahrtroute. Darüber hinaus betrifft die Erfindung eine digitale Landkarte und ein Verfahren zur Navigation eines Kraftfahrzeugs in einem Straßennetz.

Ein Kraftfahrzeugnavigationsgerät der eingangs genannten Art ist grundsätzlich bekannt. Üblicherweise lässt sich die Fahrtroute unter anderem hinsichtlich ihrer Schnelligkeit oder ihrer Weglänge optimieren. Um die Ermittlung einer optimierten Fahrtroute zu erleichtern, sind die in der Landkarte verzeichneten Verkehrswege nach Straßenklassen eingeteilt (z.B. Autobahn, Schnellstraße, Bundesstraße, Landstraße, Stadtstraße, Einbahnstraße, Feldweg, etc.). Dabei stehen beispielsweise dreispurige Autobahnen in der Hierarchie der Straßenklassen besonders weit oben, während städtische Anliegerstraßen am unteren Ende der Hierarchie angesiedelt sind. Bei der Ermittlung einer schnellsten Fahrtroute werden solche Verkehrswege bevorzugt berücksichtigt, die sich in der Hierarchie möglichst weit oben befinden.

Darüber hinaus sind moderne Navigationsgeräte in der Lage, von Radiosendern ausgestrahlte aktuelle Verkehrsinformationen zu empfangen (sogenannter Traffic Message Channel (TMC) Service). Über die TMC-Funktion stehen alle Verkehrstörungen, die einer mit dem jeweiligen Radiosender verbundenen Verkehrszentrale gemeldet werden, abrufbereit zur Verfügung. Die von dem Navigationsgerät empfangenen Verkehrsnachrichten bzw. Störungsmeldungen können ggf. in die Fahrtroutenberechnung mit einfließen, so dass beispielsweise gemeldete Verkehrsstaus durch eine optimierte Fahrtroute umgangen werden können. Problematisch ist bei den von Radiosendern angebotenen TMC-Meldungen jedoch, dass sie in Großstädten oder Ballungsgebieten durch regulären Berufsverkehr bedingte Verkehrsstörungen nicht immer angeben.

Die US-B-6 633 812 offenbart ein Verfahren zur Ermittlung einer optimierten Route von einem Startpunkt zu einem Zielort, die über vorgegebene Streckenabschnitte führt. Unterschiedliche Streckenabschnitte schneiden sich in Knotenpunkten. Den Streckenabschnitten und/oder Knotenpunkten sind Widerstände zugeordnet, die sich in Abhängigkeit von äußeren Ereignissen, z.B. von TMC-Meldungen, verändern können. Die optimierte Route zeichnet sich durch eine minimale Summe der Widerstände der zu passierenden Streckenabschnitte bzw. Knotenpunkte aus.

Die US-B-6 567 743 beschreibt ein Verfahren zur Ermittlung einer optimierten Fahrtroute, die durch zumindest einen Durchgangsbereich eines realen Straßennetzes führt. Jeder Durchgangsbereich entspricht einem Bereich auf einer gespeicherten digitalen Landkarte, auf welcher das Straßennetzwerk durch Straßenabschnitte, denen Widerstände zugeordnet sind, und Knotenpunkte dargestellt ist. Auch hier wird die Fahrtroute durch eine Minimierung der Summe der zu passierenden Widerstände optimiert. Dabei können relevante TMC-Meldungen berücksichtigt werden.

Aus der WO-A-2004/021305 sind ein Kraftfahrzeugnavigationsgerät, eine digitale Landkarte und ein Navigationsverfahren gemäß den Oberbegriffen der Ansprüche 1, 8 bzw. 9 bekannt.

Der Erfindung liegt die Aufgabe zugrunde, ein Kraftfahrzeugnavigationsgerät, eine digitale Landkarte und ein Navigationsverfahren zu schaffen, das bzw. die eine verbesserte Fahrtroutenplanung und insbesondere eine Berücksichtigung des Berufsverkehrs auch unabhängig vom TMC-Service ermöglicht.

Zur Lösung der Aufgabe sind ein Kraftfahrzeugnavigationsgerät, eine digitale Landkarte und ein Navigationsverfahren gemäß den unabhängigen Ansprüchen vorgesehen.

Bei einem erfindungsgemäßen Navigationsgerät ist wenigstens einem der von der Landkarte umfassten Gebiete mindestens ein zeitabhängiger Straßenwiderstandswert als Maß für ein zu einer bestimmten Zeit zu erwartendes Verkehrsaufkommen zugeordnet, der in die Ermittlung der Fahrtroute einbezogen werden kann. Durch die Zeitabhängigkeit des Straßenwiderstandswerts kann insbesondere ein regelmäßig auftretendes erhöhtes Verkehrsaufkommen bei der Routenplanung berücksichtigt werden, das möglicherweise - z.B. gerade wegen seiner Regelmäßigkeit - nicht in den Verkehrsnachrichten gemeldet wird. Hierbei handelt es sich insbesondere um Berufsverkehr in Großstädten oder Ballungszentren oder um Wochenendverkehr an zentralen Verkehrsknotenpunkten. Da die zeitabhängigen Straßenwiderstandswerte im Navigationsgerät gespeichert sind, können sie unabhängig von z.B. TMC-Meldungen verwertet werden.

Vorteilhafterweise ist der Straßenwiderstandswert tageszeit-, wochentag-und/oder ferienzeitabhängig. Dies trägt insbesondere einem erhöhten Verkehrsaufkommen aufgrund von Berufsverkehr Rechnung. So kann der Straßenwiderstandswert insbesondere an Werktagen in der Rushhour und an Tagen, auf die der Schulferienbeginn eines oder mehrerer Bundesländer fällt, erhöht sein bzw. umgekehrt an Wochenenden oder während der Schulferienzeiten vernachlässigbar sein.

Der Wert, den der Straßenwiderstand in vorbestimmten, besonders verkehrsreichen Zeiten annimmt, kann nach Größe und/oder Besiedelungsdichte des jeweiligen Gebietes variieren. So kann dem Gebiet einer Kleinstadt beispielsweise ein kleinerer Straßenwiderstandswert zugeordnet sein als dem Gebiet einer Großstadt oder eines Ballungszentrums. Der Straßenwiderstandswert muss in den genannten verkehrsreichen Zeiten auch nicht immer denselben vorbestimmten Wert einnehmen. Es ist auch möglich, dass der Straßenwiderstandswert z.B. im morgendlichen Berufsverkehr einen höheren Wert einnimmt als im abendlichen Berufsverkehr, weil letzterer sich erfahrungsgemäß über einen längeren Zeitraum verteilt und daher weniger dicht ist.

Erfindungsgemäß sind die auf der Landkarte verzeichneten Straßen nach Straßenklassen klassifiziert, und ein in einem Gebiet zeitweise erhöhter Straßenwiderstandswert bewirkt eine zeitweise Umklassifikation mindestens eines durch das Gebiet verlaufenden Straßenabschnitts in eine andere Straßenklasse. Vorzugsweise führt die Erhöhung des Straßenwiderstandswerts zu einer Herabsetzung ausgewählter oder aller durch das Gebiet führender Straßenabschnitte in eine niedrigere Klasse der Straßenklassenhierarchie. Eine dreispurige Stadtringautobahn wird durch einen erhöhten Straßenwiderstandswert z.B. in eine zweispurige Ringstraße umgestuft. Je nach Größe des Straßenwiderstandswerts kann dabei eine Herabstufung um eine oder mehr Straßenklassen in Betracht kommen. Bei der Ermittlung einer schnellsten Fahrtroute wird ein solcher herabgestufter, d.h. mit einem erhöhten Straßenwiderstand belegter Straßen- oder Autobahnabschnitt entsprechend seiner aktuellen errechneten Straßenklasse berücksichtigt.

Gemäß einer vorteilhaften Ausführungsform des Navigationsgeräts ist die zentrale Recheneinheit mit einem Algorithmus zur selbsttätigen Ermittlung eines Straßenwiderstandswerts wenigstens eines Gebiets ausgestattet, das von einer in das Speichermedium eingegebenen Landkarte umfasst ist. Die zentrale Recheneinheit ist mit anderen Worten von sich aus in der Lage, eine in das Speichermedium eingespeicherte Landkarte zu analysieren und bestimmten Gebieten der Landkarte entsprechende Straßenwiderstandswerte zuzuordnen. Das Navigationsgerät kann folglich mit einer Landkarte ausgerüstet werden, auf der noch keine verkehrstechnische Wertung der erfassten Gebiete erfolgt ist, gewissermaßen also mit Rohkartenmaterial. Der Algorithmus kann spezielle Filter umfassen, mit deren Hilfe die Größe und die Besiedelungsdichte von besiedelten Gebieten ermittelbar sind. Je nach Größe einer Stadt oder eines Ballungszentrums lässt sich anhand von Erfahrungswerten ein beispielsweise im Berufsverkehr zu erwartendes Verkehrsaufkommen vorhersagen und danach ein vorbestimmter Straßenwiderstandswert festlegen. Bei der Ermittlung des Straßenwiderstandswerts kann zusätzlich auch die Struktur der in dem betreffenden Gebiet vorhandenen Verkehrswege, z.B. die Existenz von Stadtautobahnen oder Ringstraßen, berücksichtigt werden.

Das jeweilige Gebiet kann über seine gesamte Fläche mit einem konstanten Straßenwiderstandswert belegt sein. Dadurch ist die Menge der bei der Ermittlung der optimierten Fahrtroute in der zentralen Recheneinheit zu verarbeitenden Daten begrenzt.

Alternativ kann das jeweilige Gebiet mit einem in Richtung der Peripherie abnehmenden Straßenwiderstandswert versehen sein. Auf diese Weise können zentrumsnahe Straßen in der Rushhour z.B. um zwei Straßenklassen und weiter außen liegende Hauptverkehrsstraßen um lediglich eine Straßenklasse herabgestuft werden. Dies stellt eine realistischere Abbildung des in Wirklichkeit zu erwartenden Verkehrsaufkommens dar und ermöglicht eine differenziertere Ermittlung der optimierten Fahrtroute.

Gemäß einer weiteren Ausführungsform ist ein mit der zentralen Recheneinheit verbundenes Eingabemittel vorgesehen, das eine wahlweise Einbeziehung des Straßenwiderstandswerts in die Ermittlung der optimierten Fahrtroute ermöglicht. Die Entscheidung darüber, ob der zeitabhängige Straßenwiderstandswert bei der Fahrtroutenplanung berücksichtigt werden soll oder nicht, liegt folglich auf Seiten des Fahrzeugsführers.

Das erfindungsgemäße Navigationsgerät kann ferner eine Empfangseinheit zum Empfangen von Verkehrsstörungsdaten aufweisen, die von einer externen Quelle gesendet werden und die bei der Ermittlung der optimierten Fahrtroute berücksichtigbar sind. Bei diesen extern gesendeten Verkehrsstörungsdaten kann es sich beispielsweise um von Radiosendern im Rahmen des TMC-Service ausgestrahlte Verkehrsnachrichten handeln. Auf diese Weise können tatsächliche aktuelle Verkehrsstörungen zusätzlich zu dem durch den Straßenwiderstandswert prognostizierten Verkehrsaufkommen bei der Routenplanung berücksichtigt werden. So kann beispielsweise eine unfallbedingte Vollsperrung einer Autobahn oder Straße zu einer weiteren Erhöhung eines ggf. ohnehin schon erhöhten Straßenwiderstandswertes führen und bei der Ermittlung einer optimierten Fahrtroute entsprechend berücksichtigt werden.

Ein weiterer Gegenstand der Erfindung ist eine digitale Landkarte nach Anspruch 10. Dadurch, dass die Landkarte bereits von vornherein mit zeitabhängigen Straßenwiderstandswerten versehen ist, ist nach Einspeisung der Landkarte in ein Navigationsgerät keine weitere Analyse der Landkarte zur Zuordnung von Straßenwiderstandswerten durch das Navigationsgerät erforderlich. Das Navigationsgerät braucht somit nicht mit einem entsprechenden Algorithmus versehen zu sein. Zusätzlich zu einer rechnergestützten Ermittlung von Straßenwiderstandswerten können außerdem solche Gebiete oder Verkehrsknotenpunkte manuell mit einem Straßenwiderstandswert belegt werden, die sich erfahrungsgemäß als verkehrstechnisch problematisch erwiesen haben, die aber bei einer automatischen Ermittlung von Straßenwiderstandswerten nicht erfasst werden.

Ein weiterer Aspekt der Erfindung ist ferner ein Verfahren zur Navigation eines Kraftfahrzeugs in einem Straßennetz gemäß Anspruch 11, durch das die in Verbindung mit dem erfindungsgemäßen Navigationsgerät bereits erwähnten Verbesserungen bei der Ermittlung einer optimierten Fahrtroute erreicht werden. Bei vorteilhaften Ausführungsformen des Verfahrens werden die bevorzugten Ausbildungen des Navigationsgeräts entsprechend verwendet, wodurch die jeweiligen bereits genannten Vorteile erzielt werden.

Nachfolgend wird die Erfindung rein beispielhaft anhand einer vorteilhaften Ausführungsform und unter Bezugnahme auf die beigefügte Zeichnung beschrieben. Es zeigen:
- Fig. 1: eine schematische Darstellung eines erfindungsgemäßen Navigationsgeräts; und
- Fig. 2: einen Ausschnitt aus einer digitalen Landkarte, in der optimierte Fahrtrouten dargestellt sind.

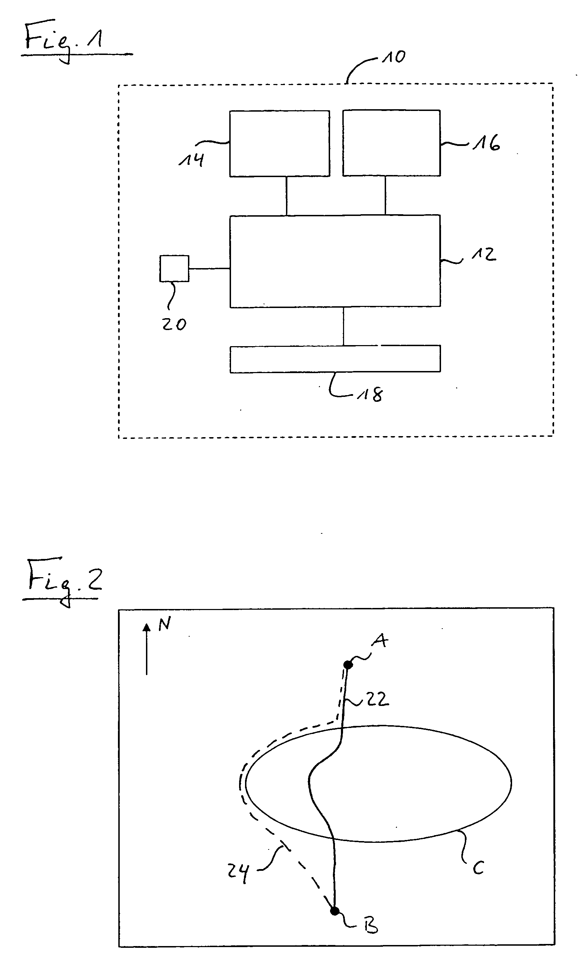

Das in Fig. 1 dargestellte Kraftfahrzeugnavigationsgerät 10 umfasst eine zentrale Recheneinheit 12, ein mit der Recheneinheit 12 verbundenes Speichermedium 14, in dem eine digitale Landkarte abgespeichert ist, eine Anzeigetafel 16, beispielsweise einen LCD- oder TFT-Bildschirm, auf der ein Ausschnitt der in dem Speichermedien 14 gespeicherten Landkarte für einen Fahrzeugführer darstellbar ist, und ein Bedienfeld 18 zur Bedienung des Navigationsgeräts 10.

Das Speichermedium des gezeigten Ausführungsbeispiels ist ein fester Speicherbaustein (Flash Memory). Alternativ oder zusätzlich kann die Landkarte aber auch auf einem auswechselbaren Speicherelement, zum Beispiel einer CD-ROM oder DVD, gespeichert sein.

Das Bedienfeld 18 ermöglicht dem Bediener des Navigationsgeräts 10 unter anderem, den Start- und Zielort einer zu ermittelnden Fahrtroute einzugeben und die Kriterien auszuwählen, nach denen die Fahrtroute optimiert werden soll. Folgende Kriterien sind dabei umfasst: kürzeste Fahrroute, schnellste Fahrtroute, möglichst viel Autobahnbenutzung, keine Autobahnbenutzung, etc. Erfindungsgemäß ist außerdem das Kriterium "Rushhour beachten" vorgesehen, dessen Funktion nachfolgend beschrieben wird.

Die auf der Landkarte verzeichneten Verkehrswege sind in mehrere Straßenklassen eingeteilt. Dabei ergib sich eine Grobeinteilung bereits aus der Hierarchie der Straßen, nämlich ob es sich z.B. um eine Autobahn, eine Schnellstraße, eine Bundes- bzw. Landstraße, eine städtische Ausfall-oder Ringstraße, eine Anliegerstraße oder einen Feldweg handelt. Zusätzlich kann die Straßenklasseneinteilung noch danach verfeinert werden, ob es sich jeweils um eine ein-, zwei-, drei- oder mehrspurige Straße handelt. Zur Berechnung einer schnellsten Fahrtroute werden, sofern vorhanden, bevorzugt mehrspurige Straßen in Betracht gezogen, da auf diesen tendenziell höhere Geschwindigkeiten zugelassen sind und diese erfahrungsgemäß eine größere Anzahl von Kraftfahrzeugen pro Zeit passieren lassen. Eine mehrspurige Straße, die in der Straßenklassenhierarchie weit oben eingeordnet ist, weist also per Klasseneinteilung gewissermaßen einen geringeren Straßenwiderstand auf als beispielsweise eine einspurige Straße in einem Wohngebiet oder ein Feldweg, die in der Hierarchie weiter unten stehen.

Wünscht der Bediener des Navigationsgeräts 10 die Ermittlung einer schnellsten Fahrtroute von A nach B, so errechnet die zentrale Recheneinheit 12 aus einer Vielzahl von möglichen Fahrtrouten diejenige Route, bei der die Routenlänge unter Berücksichtigung der entlang der Route auftretenden Straßenwiderstände hinsichtlich der Fahrtzeit optimiert ist.

Das Navigationsgerät 10 weist ferner eine Empfangseinheit 20 zum Empfangen von Verkehrsstörungsdaten auf, welche ausgehend von einer Verkehrszentrale über eine oder mehrere Radiostationen ausgesendet werden. Bei diesem sogenannten TMC-Service werden aktuelle Verkehrsnachrichten und Störungsmeldungen auf dem RDS-Signal ausgestrahlt. Diese von der Empfängereinheit 20 empfangenen und an die zentrale Recheneinheit 12 weitergeleiteten Daten können bei einer entsprechenden Aktivierung der Funktion durch den Bediener in eine ursprüngliche Routenberechnung mit einfließen oder auch während der Fahrt zu der Ermittlung einer neuen Fahrtroute führen, die dazu geeignet ist, einen gemeldeten, unvorhergesehenen Verkehrsstau zu umfahren.

Da die ausgestrahlten Verkehrsnachrichten typischerweise nur Staus ab einer bestimmten Länge melden, und andere, insbesondere regelmäßig auftretende, beispielsweise berufsverkehrbedingte Verkehrsstörungen über den TMC-Service selten oder gar nicht gemeldet werden, sind den auf der in dem Speichermedium 14 gespeicherten Landkarte verzeichneten Gebieten zeitabhängige Straßenwiderstandswerte als Maß für ein zu einer bestimmten Zeit zu erwartendes Verkehrsaufkommen zugeordnet.

Die Zeitabhängigkeit der Straßenwiderstandswerte äußert sich darin, dass die Straßenwiderstandswerte in den Zeiten, in denen in dem jeweiligen Gebiet erfahrungsgemäß ein erhöhtes Verkehrsaufkommen herrscht, einen erhöhten Wert einnehmen und ansonsten vernachlässigbar klein sind. So können die Straßenwiderstandswerte in einem Stadtbereich insbesondere an Werktagen während des Berufsverkehrs, beispielsweise zwischen 7.00 und 9.00 Uhr und zwischen 16.00 und 19.00 Uhr, einen vergleichsweise hohen Wert einnehmen, während sie zu den übrigen Tageszeiten und am Wochenende, bzw. an Feiertagen Null sind. Auch solche Tage, an denen in einem oder mehreren Bundesländern Schulferien beginnen, können eine Erhöhung des Straßenwiderstandswerts bewirken, wobei dies insbesondere für typische Urlaubsautobahnen und entsprechende Grenzübergänge gilt.

Der Wert, den der zeitabhängige Straßenwiderstandswert eines Gebiets maximal einnimmt, richtet sich vor allem nach der Besiedelungsdichte des jeweiligen Gebiets, da sich das Verkehrsaufkommen während der Rushhour in einer Kleinstadt erfahrungsgemäß weniger problematisch auswirkt als in einer Großstadt oder in einem Ballungszentrum.

Die zentrale Recheneinheit 12 des in Fig. 1 dargestellten Navigationsgeräts ist mit einem Algorithmus ausgerüstet, der bei Bedarf oder bei einem erstmaligen Einspeichern einer Landkarte in das Speichermedium 14 das eingegebene Rohkartenmaterial analysiert und in Abhängigkeit der Besiedlungs- und Straßendichte sowie den jeweils vorhandenen Straßenklassen den jeweiligen Gebieten entsprechende Straßenwiderstandswerte zuordnet. Zur Minimierung des Rechenaufwands bei der Erzeugung der Straßenwiderstandswerte bzw. bei der späteren Planung einer Fahrtroute wird einem gesamten Stadtgebiet jeweils nur ein Straßenwiderstandswert zugeordnet. Alternativ ermöglicht eine differenziertere, z.B. stadtteilabhängige, Zuordnung von unterschiedlich großen Straßenwiderstandswerten in einem Stadtgebiet eine höhere Auflösung und somit eine verbesserte, d.h. feiner abgestufte Fahrtroutenplanung.

Bei einer alternativen Erzeugung von Straßenwiderstandswerten werden den von der Landkarte umfassten Gebieten bereits bei der Herstellung der digitalisierten Landkarte entsprechende Straßenwiderstandswerte zugeordnet. Hierbei kann ein ähnlicher Algorithmus verwendet werden, wie er voranstehend beschrieben wurde. Zusätzlich können solchen Gebieten außerdem auf manuelle Weise erhöhte Straßenwiderstandswerte zugewiesen werden, die sich in der Vergangenheit verkehrstechnisch als problematisch erwiesen haben. Es werden gewissermaßen per Hand Erfahrungswerte in die Landkarte eingegeben.

Aktiviert der Bediener des Navigationsgeräts 10 die Option "Rushhour beachten", so werden solche Gebiete, die im Bereich einer kürzesten Fahrroute von einem ausgewählten Start- und Zielort A, B liegen und die einen erhöhten Straßenwiderstandswert aufweisen, bei der Routenplanung nach Möglichkeit umgangen. Bei der Ermittlung einer schnellsten Fahrtroute gilt es auch hier unter Berücksichtigung der Straßenklassen und zusätzlich der erhöhten Straßenwiderstandswerte eine optimierte Fahrtroute zu berechnen, die durch eine Umgehung des Gebietes mit erhöhtem Straßenwiderstandswert zwar eine längere Wegstrecke, gleichzeitig aber aufgrund niedrigerer oder sogar vernachlässigbarer Straßenwiderstandswerte eine verkürzte Fahrtzeit aufweist.

Eine Erhöhung des Straßenwiderstandswertes in einem Gebiet bewirkt eine Einordnung der in dem Gebiet gelegenen Abschnitte zumindest fernverkehrstechnisch relevanter Straßen oder Hauptverkehrsstraßen in eine andere Straßenklasse. Beispielsweise kann eine mittlere Erhöhung des Straßenwiderstandswertes zu einer rechnerischen Einstufung einer in Wirklichkeit dreispurigen Autobahn als nur noch zweispurige Autobahn führen, während ein besonders hoher Straßenwiderstandswert bewirkt, dass eine in Wirklichkeit dreispurige Autobahn bei der Ermittlung einer optimierten Fahrroute nur noch als einspurige Bundesstraße berücksichtigt wird. Dementsprechend lassen sich auch zweispurig ausgebaute Stadtringstraßen auf kleinere einspurige Straßen zurückstufen. Da kleinere Straßen zwangsläufig ein langsameres Fortkommen bedeuten, werden gegenüber diesen bevorzugt solche Straßen bei der Ermittlung einer schnellsten Fahrtroute berücksichtigt, die zwar eine gewisse Verlängerung der Fahrtstrecke bedeuten, gleichwohl aber deutlich höhere Fahrtgeschwindigkeiten zulassen und somit im Ergebnis eine schnellere Ankunft am Zielort ermöglichen.

In Fig. 2 ist ein Landkartenausschnitt schematisch dargestellt, der einen Startort A, ein Großstadtgebiet C und einen Zielort B zeigt. Dargestellt sind ferner zwei Fahrtrouten von A nach B, die unter dem Kriterium "schnellste Fahrtroute" ermittelt wurden. Die eine Fahrtroute 22, die als durchgezogene Linie dargestellt ist, wurde ohne Berücksichtigung des Berufsverkehrs ermittelt und führt teilweise durch das Großstadtgebiet C. Die andere, als gestrichelte Linie dargestellte Fahrtroute 24 dagegen wurde unter dem Kriterium "Rushhour beachten" berechnet und ist im Vergleich zu der ersten Fahrtroute 22 die schnellere Route, obwohl sie an der westlichen Peripherie des Großstadtgebiets C vorbeiführt und somit um einige Kilometer länger ist.

### Bezugszeichenliste

- 10: Kraftfahrzeugnavigationsgerät
- 12: zentrale Recheneinheit
- 14: Speichermedium
- 16: Anzeigetafel
- 18: Bedienfeld
- 20: Empfängereinheit
- 22: Fahrtroute
- 24: Fahrtroute

- A: Startort
- B: Zielort
- C: Großstadtgebiet

## Patentansprüche

1. Kraftfahrzeugnavigationsgerät (10) mit einem Speichermedium (14), das eine digitale Landkarte enthält, und einer mit dem Speichermedium (14) verbundenen zentralen Recheneinheit (12) zur Ermittlung einer optimierten Fahrtroute, wobei wenigstens einem der von der Landkarte umfassten Gebiete (C) mindestens ein zeitabhängiger Straßenwiderstandswert als Maß für ein zu einer bestimmten Zeit zu erwartendes Verkehrsaufkommen zugeordnet ist, der in die Ermittlung der Fahrtroute (24) einbeziehbar ist,
**dadurch gekennzeichnet ,**
**dass** auf der Landkarte verzeichnete Straßen nach Straßenklassen klassifiziert sind und ein in einem Gebiet (C) zeitweise erhöhter Straßenwiderstandswert eine zeitweise Umklassifikation mindestens eines durch das Gebiet verlaufenden Straßenabschnitts in eine andere Straßenklasse bewirkt.

2. Navigationsgerät (10) nach einem der vorhergehenden Ansprüche,
**dadurch gekennzeichnet ,**
**dass** dem Gebiet (C) ein über die gesamte Fläche des Gebiets (C) konstanter Straßenwiderstandswert zugeordnet ist.

3. Navigationsgerät (10) nach Anspruch 1 oder 2,
**dadurch gekennzeichnet ,**
**dass** dem Gebiet (C) ein in Richtung der Peripherie des Gebiets (C) abnehmender Straßenwiderstandswert zugeordnet ist.

4. Navigationsgerät (10) nach einem der vorhergehenden Ansprüche,
**dadurch gekennzeichnet ,**
**dass** der Straßenwiderstandswert tageszeit-, wochentag- und/oder ferienzeitabhängig ist.

5. Navigationsgerät (10) nach einem der vorhergehenden Ansprüche,
**dadurch gekennzeichnet ,**
**dass** der Straßenwiderstandswert von der Besiedelungsdichte des Gebiets (C) abhängig ist.

6. Navigationsgerät (10) nach einem der vorhergehenden Ansprüche,
**dadurch gekennzeichnet ,**
**dass** die zentrale Recheneinheit (12) mit einem Algorithmus zur selbsttätigen Ermittlung mindestens eines zeitabhängigen Straßenwiderstandswerts wenigstens eines Gebiets (C) ausgestattet ist, das von einer in das Speichermedium (14) eingegebenen Landkarte umfasst ist.

7. Navigationsgerät (10) nach einem der vorhergehenden Ansprüche,
**dadurch gekennzeichnet ,**
**dass** ein mit der zentralen Recheneinheit (12) verbundenes Eingabemittel (18) vorgesehen ist, das eine wahlweise Einbeziehung des Straßenwiderstandswerts in die Ermittlung der optimierten Fahrtroute (24) ermöglicht.

8. Digitale Landkarte, wobei wenigstens einem der von der Landkarte umfassten Gebiete (C) mindestens ein zeitabhängiger Straßenwiderstandswert als Maß für ein zu einer bestimmten Zeit, insbesondere zu einer bestimmten Tageszeit und/oder an einem bestimmten Wochentag, zu erwartendes Verkehrsaufkommen in dem jeweiligen Gebiet (C) zugeordnet ist,
**dadurch gekennzeichnet ,**
**dass** auf der Landkarte verzeichnete Straßen nach Straßenklassen klassifiziert sind und ein in einem Gebiet (C) zeitweise erhöhter Straßenwiderstandswert eine zeitweise Umklassifikation mindestens eines durch das Gebiet verlaufenden Straßenabschnitts in eine andere Straßenklasse bewirkt.

9. Verfahren zur Navigation eines Kraftfahrzeugs in einem Straßennetz, bei dem zur Ermittlung einer optimierten Fahrtroute (24) mindestens ein wenigstens einem in einer digitalen Landkarte verzeichneten Gebiet (C) zugeordneter zeitabhängiger Straßenwiderstandswert, der ein Maß für ein zu einer bestimmten Zeit in dem Gebiet (C) zu erwartendes Verkehrsaufkommen darstellt, in die Ermittlung der Fahrtroute (24) einzogen wird,
**dadurch gekennzeichnet ,**
**dass** auf der Landkarte verzeichnete Straßen nach Straßenklassen klassifiziert sind und durch einen in einem Gebiet (C) zeitweise erhöhten Straßenwiderstandswert zeitweise mindestens ein durch das Gebiet verlaufender Straßenabschnitt in eine andere Straßenklasse umklassifiziert wird.

## Claims

1. A motor vehicle navigation system (10) comprising a memory medium (14), which includes a digital map, and a central processing unit (12) connected to the memory medium (14) for the determination of an optimized route, wherein at least one time-dependent road resistance value is associated with at least one of the areas (C) covered by the map as a measure for a volume of traffic to be expected at a specific time which can be included in the determination of the route (24),
**characterized in that**
roads drawn on the map are classified according to road classes and a road resistance value increased at times in an area (C) effects a reclassification into a different road class at times of at least one road section running through the area.

2. A navigation system (10) in accordance with any one of the preceding claims, **characterized in that** a road resistance value constant over the whole expanse of the area (C) is associated with the area (C).

3. A navigation system (10) in accordance with one of the claims 1 or 2, **characterized in that** a road resistance value reducing in the direction of the periphery of the area (C) is associated with the area (C).

4. A navigation system (10) in accordance with any one of the preceding claims, **characterized in that** the road resistance value is dependent on the time of day, on the day of the week and/or on a vacation period.

5. A navigation system (10) in accordance with any one of the preceding claims, **characterized in that** the road resistance value is dependent on the population density of the area (C).

6. A navigation system (10) in accordance with any one of the preceding claims, **characterized in that** the central processing unit (12) is equipped with an algorithm for the automatic determination of at least one time-dependent road resistance value of at least one area (C) which is covered by a map input into the memory medium (14).

7. A navigation system (10) in accordance with any one of the preceding claims, **characterized in that** an input means (18) connected to the central processing unit (12) is provided which permits an optional inclusion of the road resistance value into the determination of the optimized route (24).

8. A digital map, wherein at least one time-dependent road resistance value is associated with at least one of the areas (C) covered by the map as a measure for a volume of traffic in the respective area (C) to be expected at a specific time, in particular at a specific time of day and/or on a specific day of the week,
**characterized in that**
roads drawn on the map are classified according to road classes and a road resistance value increased at times in an area (C) effects a reclassification into a different road class at times of at least one road section running through the area

9. A method for the navigation of a motor vehicle in a road network in which, for the determination of an optimized route (24), at least one time-dependent road resistance value is included in the determination of the route (24) which is associated with at least one area (C) drawn in a digital map and which represents a measure for a volume of traffic to be expected in the area (C) at a specific time,
**characterized in that**
roads drawn on the map are classified according to road classes and a road resistance value increased at times in an area (C) effects a reclassification into a different road class at times of at least one road section running through the area

## Revendications

1. Appareil de navigation pour véhicules (10) avec un support de stockage (14)contenant une carte géographique numérique et une unité de calcul (12) centrale reliée au support de stockage (14) afin de déterminer un itinéraire optimisé, sachant qu'à au moins l'une des zones (C) englobée par la carte géographique est associée au moins une valeur de résistance routière dépendant du temps pour un événement de circulation escompté à un moment donné, qui peut être impliqué dans la détermination de l'itinéraire (24),
**caractérisé en ce que**
des routes, mentionnées sur la carte routière, sont classées selon des classes de route et une valeur de résistance routière, augmentée par moments dans une zone (C), provoque une reclassification temporaire en une autre classe routière d'au moins un tronçon routier s'étendant à travers la zone.

2. Appareil de navigation (10) selon l'une des revendications précédentes,
**caractérisé en ce que**,
une valeur de résistance routière, constante pour toute la surface de la zone (C), est associée à la zone (C).

3. Appareil de navigation (10) selon la revendication 1 ou 2,
**caractérisé en ce que**,
une valeur de résistance routière, diminuant en allant dans la direction de la périphérie de la zone (C), est associée à la zone (C).

4. Appareil de navigation (10) selon l'une des revendications précédentes,
**caractérisé en ce que**
la valeur de résistance routière dépend de l'heure du jour, du jour de la semaine et/ou des dates fériées.

5. Appareil de navigation (10) selon l'une des revendications précédentes, **caractérisé en ce que** la valeur de résistance routière dépend de la densité de population de la zone (C).

6. Appareil de navigation (10) selon l'une des revendications précédentes,
**caractérisé en ce que**
l'unité de calcul (12) centrale est munie d'un algorithme, pour déterminer automatiquement au moins une valeur de résistance routière dépendant du temps d'au moins une zone (C), incluse par une carte routière introduite dans le support de stockage (14).

7. Appareil de navigation (10) selon l'une des revendications précédentes,
**caractérisé en ce**
**qu'**est prévu un moyen d'introduction (18) relié à l'unité de calcul (12) centrale, permettant une implication au choix de la valeur de résistance routière dans la détermination de l'itinéraire (24) optimisé.

8. Carte routière numérique, sachant que, au moins à l'une des zones (C) incluse dans les cartes routières, est associée au moins une valeur de résistance routière dépendant du temps, en tant qu'indication quantitative d'un événement de circulation escompté pour une date déterminée, en particulier une heure du jour déterminée et/ou un jour de la semaine déterminé, dans la zone (C) respective,
**caractérisé en ce que**
des routes, mentionnées sur la carte routière, sont classées selon des classes de route et une valeur de résistance routière, augmentée temporairement dans une zone (C), provoque une reclassification temporaire, en une autre classe routière, d'au moins un tronçon de route s'étendant à travers la zone.

9. Procédé de navigation d'un véhicule automobile dans un réseau routier pour lequel, pour déterminer un itinéraire (24) optimisé, on implique dans la détermination de l'itinéraire (24) au moins une valeur de résistance routière dépendant du temps, associée à une zone (C) indiquée dans une carte routière numérique, qui constitue une indication quantitative d'un événement de circulation escompté à un moment donné dans la zone (C),
**caractérisé en ce que**,
des routes, indiquées sur la carte routière, sont classées d'après des classes de route et, au moyen d'une valeur de résistance routière, augmentée par moments, dans une zone (C), au moins un tronçon de route s'étendant dans la zone est reclassé temporairement en une autre classe routière.
